# EUROPEAN PATENT SPECIFICATION

(11) **EP 3 637 595 B1**
(45) Date of publication and mention of the grant of the patent: **24.11.2021**
(21) Application number: 19202354.7
(22) Date of filing: 10.10.2019
(51) Int. Cl.: H02K 9/14, H02K 9/26, H02K 15/00, H02K 5/18, H02K 5/20

(54) **ELECTRIC MACHINE**
ELEKTRISCHE MASCHINE
MACHINE ÉLECTRIQUE

(30) Priority: 11.10.2018 CN 201811184792
(43) Date of publication of application: 15.04.2020
(73) Proprietor: Siemens Aktiengesellschaft, 80333 München (DE)
(72) Inventor: ZOU, Ling Ling, Nanjing, 210008 (CN); WANG, Xiao Yong, Nanjing, 211100 (CN)
(74) Representative: Isarpatent

(56) References cited:
- EP-A1- 1 613 026
- EP-A1- 2 804 295
- EP-A1- 3 116 106
- EP-A2- 2 549 629
- JP-A- H06 311 689
- JP-A- 2009 295 826
- JP-B2- 5 987 113
- US-A1- 2008 030 086

## Description

### Technical field

The present invention relates to an electric machine, in particular to an electric machine having an improved electric machine protective cover.

### Background art

Electric machines are generally disposed in industrial environments, where large amounts of dust and impurities will generally enter the gaps between cooling fins of the electric machines, in serious cases causing blockage of the cooling fins and thereby affecting the cooling effect thereof.

At present, a protective cover for an electric machine is integrally formed with an electric machine casing, and cannot be removed; furthermore, cleaning operations on electric machine cooling fins which are commonly seen nowadays are all manual cleaning operations; specifically, a tool such as a brush is generally used to remove oil and dust in the fins. This method of manual cleaning increases the workload of maintenance personnel, and at the same time, the structural characteristics of the fin structure makes manual cleaning difficult, with low efficiency; furthermore, manual cleaning by maintenance personnel might not be sufficiently comprehensive, with improper cleaning of details. Due to such detail imperfections, some stubborn adhering substances can easily remain on the electric machine cooling fins; the residue of such adhering substances will lead to a decrease in the cooling effect of the fins, such that heat generated during electric machine operation cannot be promptly dissipated, and this will have an impact on the performance, stability and service life of the entire electric machine.

EP 2 549 629 A2, WO 2014/207780 A1, JP H06/311689 A, EP 3 116 106 A1 describe electrical machines comprising covers.

### Content of the invention

The embodiments of the present invention are intended to provide an electric machine structure with an improved electric machine protective casing.

The invention provides an electric machine according to claim 1. Optional features of the electric machine are listed in the dependent claims 2-8.

It should be understood that both the general description of the present invention above and the detailed description thereof below are illustrative and explanatory, and intended to provide further explanation of the present invention as described in the claims.

### Description of the accompanying drawings

The accompanying drawings are included to provide further understanding of the present invention. They are recorded and form part of the present application. The drawings show embodiments of the present invention, and together with this description serve to explain the principles of the present invention. In the drawings:
Fig. 1 is a sectional view of an electric machine according to an embodiment of the present invention.
Fig. 2 is a schematic view of an electric machine according to another embodiment of the present invention.
Fig. 3 is a schematic view of an electric machine according to another embodiment of the present invention.

Key to labels used in the drawings:
- 1: electric machine protective cover
- 10: body
- 20: cleaning plate
- 30: connection part
- 22: protrusion
- 2: cooling fin

### Particular embodiments

Embodiments of the present invention are now described, making detailed reference to the accompanying drawings. Preferred embodiments of the present invention are now referred to in detail, examples thereof being shown in the accompanying drawings. If at all possible, identical labels are used in all drawings to indicate identical or similar parts. In addition, although terms used in the present invention are selected from well known and widely used terms, some terms mentioned in the description of the present invention might be selected by the applicant according to his or her judgement, and the detailed meanings thereof are explained in the relevant parts of the descriptions herein. In addition, it is required that the present invention shall be understood not just through the actual terms used, but also through the meaning implied in each term.

An electric machine according to the present invention mainly comprises an electric machine casing and an electric machine protective cover 1 removably fitted to the electric machine casing, wherein multiple cooling fins 2 are provided on the electric machine casing, the electric machine casing is integrally formed with the cooling fins 2, all of the cooling fins 2 are arranged circumferentially on the electric machine casing, and the cooling fins 2 extend in a radial direction of an electric machine shaft, so that a cooling channel is formed between adjacent cooling fins 2; the electric machine protective cover 1 surrounds the cooling fins 2, and a flow-guiding channel is formed between the electric machine protective cover 1 and the cooling fins 2. The present invention can not only realize an electric machine protection effect but also make electric machine cleaning work more simple, convenient and efficient, thereby enhancing the electric machine cooling effect and in turn improving electric machine performance, stability and service life.

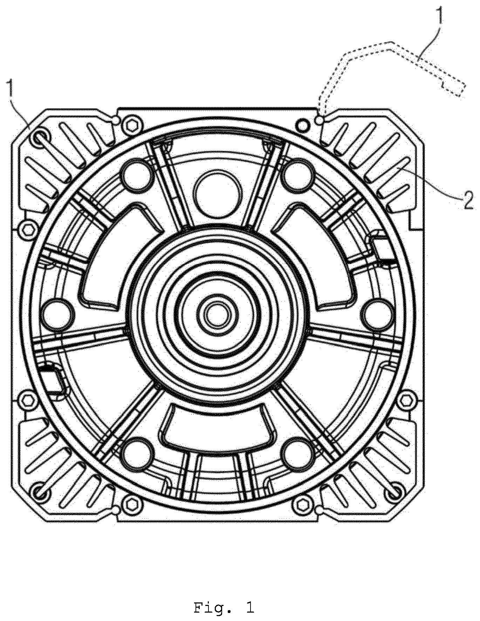

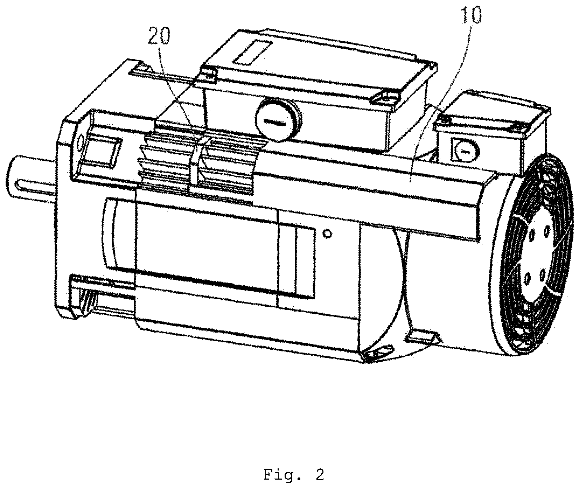

The basic principles and preferred embodiments of the present invention are discussed in greater detail with reference to figs. 1 and 2. As shown in fig. 1, an edge at one side of the electric machine protective cover 1 is mounted to the electric machine casing, and rotation of the electric machine protective cover 1 around the edge at this side is permitted; a mounting hole is provided in an outer surface of the electric machine casing, whereby an edge at another side of the electric machine protective cover 1 may be adapted to be fixed to the electric machine casing by means of the mounting hole and a threaded connection member. When the electric machine is operating, the electric machine protective cover 1 may be rotated to a first position (e.g. the position indicated by the solid line in fig. 1), at which time the electric machine protective cover 1 is fixed to the electric machine casing and covers the cooling fins 2, preventing dust and foreign bodies from falling into the cooling fins 2, and thereby protecting the electric machine; if it is necessary to clean the electric machine casing and the cooling fins 2, then the threaded connection member can be unscrewed, and the electric machine protective cover can be rotated to a second position (e.g. the position indicated by the dotted line in fig. 1), so as to make cleaning of the cooling fins 2 more convenient and efficient. In order to achieve all-round protection and dustproofing of the electric machine, four electric machine protective covers 1 may be provided, which respectively close and isolate the cooling fins 2 from the outside.

Fig. 2 shows an electric machine according to another embodiment of the present invention; taking fig. 2 as an example, an electric machine protective cover 1 mainly comprises: a body 10 and a cleaning plate 20. The body 10 is adapted for movement in an axial direction of the electric machine, and the cleaning plate 20 is connected to the body 10; the cleaning plate 20 is adapted for back-and-forth movement in the axial direction of the electric machine under the driving action of the body 10. When it is necessary to remove the electric machine protective cover 1 from the electric machine casing, all that is required to be done is to slide the body 10 of the electric machine protective cover 1 in the axial direction of the electric machine (e.g. the direction from left to right in fig. 2), and the body 10 can simultaneously drive the cleaning plate 20 to advance from one end of the electric machine casing to another end. Gaps are formed between adjacent cooling fins 2, and such gaps may be regarded as cooling channels of the electric machine; the cleaning plate 20 can thus move along the gaps between the cooling fins 2, scraping off dust and impurities which have been deposited in the cooling fins 2, and thereby cleaning the cooling fins 2. By repeating the action described above, the cooling fins 2 can be cleaned more effectively. Finally, once cleaning of the whole of the cooling fins 2 has ended, the electric machine protective cover 1 is replaced. Using the electric machine protective cover 1 provided in the present invention, cleaning of the electric machine cooling fins 2 can be accomplished at the same time as the electric machine protective cover 1 is removed; the cleaning time is short, efficiency is high and the workload is small; there is no need to consume other resources, the cleaning process step is simple, and the cost is low. In a preferred embodiment, the cleaning plate 20 has multiple protrusions 22, and the shape of the protrusions 22 fits the shape of the gaps (i.e. the cooling channels) between the cooling fins 2, in order to permit insertion of the protrusions 22 into the cooling channels; in this way the cleaning plate 20 is enabled to touch all nooks of the cooling fins 2 during cleaning, thereby accomplishing more comprehensive and thorough cleaning. Specifically, the cleaning plate 20 and the body 10 may for example be an integrally formed plastic member, with the cleaning plate 20 being fixed to one end of the body 10; such a design is simple to manufacture and has a low cost.

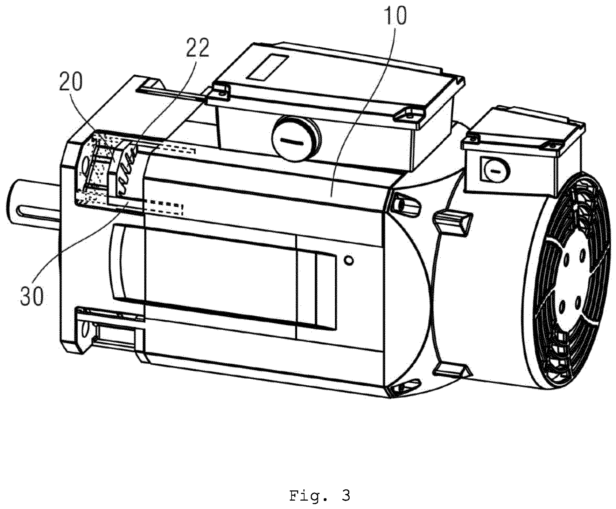

Furthermore, fig. 3 further provides an embodiment of an electric machine according to the present invention. In comparison with the embodiment shown in fig. 2, the electric machine protective cover 1 shown in fig. 3 has a retractable characteristic. Taking fig. 3 as an example, the cleaning plate 20 and the body 10 are fixed together by means of a connecting part 30; the connecting part 30 allows the cleaning plate 20 to approach or move away from the body 10. In general, when the body 10 of the electric machine protective cover 1 is located in a normal operating position, the cleaning plate 20 will correspondingly be disposed at an end of the electric machine (e.g. the position indicated by the dotted line at the left end of the electric machine in fig. 3) . However, when an electric machine flange is installed (e.g. a flange at the left side in fig. 3), the position of the cleaning plate 20 might affect the installation of the electric machine flange, therefore it is necessary to move the cleaning plate 20 inwards by a certain distance from the end of the electric machine, in order to prevent the cleaning plate 20 from obstructing the installation of the electric machine flange. Using the optimized design provided in this embodiment, the cleaning plate 20 can be moved independently without moving the body 10 of the electric machine protective cover 1; the cleaning plate 20 can avoid interference with the electric machine flange by moving a certain distance on its own in the axial direction of the electric machine. Thus, a choice can be made between the embodiments of fig. 2 and fig. 3 according to design requirements.

Specifically, the body 10 may for example be a hard insulating member, and the body 10 may extend in a circumferential direction of the electric machine casing so that a cross section of the body 10 is arc-shaped. The cleaning plate 20 may be made of a flexible material, and the protrusions 22 of the cleaning plate 20 are in close contact with the cooling fins; the flexible material can enhance the cleaning effect. Furthermore, a brush may be fixed at an edge of the cleaning plate 20; when the electric machine protective cover 1 moves back and forth along the cooling fins 2, the brush of the cleaning plate 20 can sweep the cooling fins 2, thereby having the effect of assisting cleaning.

In summary, the completely new structure of the design of the present invention ameliorates the problem of electric machine protective covers being unable to be removed, making the mechanical structure of the electric machine easier to use and maintain. Furthermore, the present invention also makes electric machine cleaning work more efficient and convenient, and improves the cooling capability of the electric machine as well as the overall performance of the electric machine.

It will be obvious to those skilled in the art that various amendments and changes in form could be made to the abovementioned demonstrative embodiments of the present invention, without deviating from the scope of the present invention. The scope of the invention is defined by the appended claims.

## Claims

1. An electric machine, comprising an electric machine casing and an electric machine protective cover (1) removably fitted to the electric machine casing, wherein multiple cooling fins (2) are provided on the electric machine casing, the electric machine protective cover (1) surrounds the cooling fins (2), and a flow-guiding channel is formed between the electric machine protective cover (1) and the cooling fins (2), **characterized in that** the electric machine protective cover (1) comprises:
a body (10), adapted for movement in an axial direction of the electric machine; and
a cleaning plate (20) connected to the body (10), the cleaning plate (20) being adapted for back-and-forth movement in the axial direction of the electric machine under the driving action of the body (10),
wherein a cooling channel is formed between adjacent cooling fins among the cooling fins (2), and the cleaning plate (20) has multiple protrusions (22); the shape of the protrusion (22) fits the shape of the cooling channel, in order to permit insertion of the protrusion (22) into the cooling channel.

2. The electric machine as claimed in claim 1, wherein an outer surface of the electric machine casing is provided with a mounting hole, an edge at one side of the electric machine protective cover (1) is mounted to the electric machine casing, and rotation of the electric machine protective cover (1) around the edge is permitted; an edge at another side of the electric machine protective cover (1) is adapted to be fixed to the electric machine casing by means of the mounting hole and a threaded connection member.

3. The electric machine as claimed in claim 1, wherein the body (10) extends in a circumferential direction of the electric machine casing so that a cross section of the body (10) is arc-shaped.

4. The electric machine as claimed in claim 1, wherein the cleaning plate (20) is fixed to one end of the body (10).

5. The electric machine as claimed in claim 1, wherein the cleaning plate (20) and the body (10) are fixed together by means of a connecting part (30), the connecting part (30) allowing the cleaning plate (20) to approach or move away from the body (10) .

6. The electric machine as claimed in claim 1, wherein the cleaning plate (20) and the body (10) are an integrally formed plastic member.

7. The electric machine as claimed in claim 1, wherein the body (10) is a hard insulating member, and the cleaning plate (20) is made of a flexible material.

8. The electric machine as claimed in claim 1, wherein the electric machine comprises four said electric machine protective covers (1) disposed symmetrically on an outer surface of the electric machine casing.

## Patentansprüche

1. Elektrische Maschine, umfassend ein Gehäuse der elektrischen Maschine und eine abnehmbar am Gehäuse der elektrischen Maschine angebrachte Schutzabdeckung der elektrischen Maschine (1), wobei mehrere Kühlrippen (2) am Gehäuse der elektrischen Maschine vorgesehen sind, die Schutzabdeckung der elektrischen Maschine (1) die Kühlrippen (2) umgibt und ein Strömungsführungskanal zwischen der Schutzabdeckung der elektrischen Maschine (1) und den Kühlrippen (2) ausgebildet ist,
**dadurch gekennzeichnet, dass**
die Schutzabdeckung (1) der elektrischen Maschine umfasst:
einen Körper (10), der zur Bewegung in axialer Richtung der elektrischen Maschine angepasst ist; und
eine mit dem Körper (10) verbundene Reinigungsplatte (20), wobei die Reinigungsplatte (20) für eine Hin- und Herbewegung in axialer Richtung der elektrischen Maschine unter der Antriebswirkung des Körpers (10) angepasst ist,
wobei ein Kühlkanal zwischen benachbarten Kühlrippen unter den Kühlrippen (2) ausgebildet ist und die Reinigungsplatte (20) mehrere Vorsprünge (22) aufweist; wobei die Form des Vorsprungs (22) an die Form des Kühlkanals angeglichen ist,um das Einführen des Vorsprungs (22) in den Kühlkanal zu ermöglichen.

2. Elektrische Maschine gemäß Anspruch 1, wobei eine Außenfläche des Gehäuses der elektrischen Maschine mit einem Montageloch versehen ist, eine Kante an einer Seite der Schutzabdeckung (1) der elektrischen Maschine am Gehäuse der elektrischen Maschine angebracht ist und eine Drehung der Schutzabdeckung (1) der elektrischen Maschine um die Kante ermöglicht wird; eine Kante an einer anderen Seite der Schutzabdeckung (1) der elektrischen Maschine dazu angepasst ist, am Gehäuse der elektrischen Maschine mittels des Montagelochs und eines Gewindeverbindungselements befestigt zu werden.

3. Elektrische Maschine gemäß Anspruch 1, wobei sich der Körper (10) in einer Umfangsrichtung des Gehäuses der elektrischen Maschine erstreckt, sodass ein Querschnitt des Körpers (10) bogenförmig ist.

4. Elektrische Maschine gemäß Anspruch 1, wobei die Reinigungsplatte (20) an einem Ende des Körpers (10) befestigt ist.

5. Elektrische Maschine gemäß Anspruch 1, wobei die Reinigungsplatte (20) und der Körper (10) mittels eines Verbindungsteils (30) aneinander befestigt sind, wobei das Verbindungsteil (30) es der Reinigungsplatte (20) ermöglicht, sich dem Körper (10) zu nähern oder sich von ihm zu entfernen.

6. Elektrische Maschine gemäß Anspruch 1, wobei die Reinigungsplatte (20) und der Körper (10) ein einstückig ausgebildetes Kunststoffteil sind.

7. Elektrische Maschine gemäß Anspruch 1, wobei der Körper (10) ein hartes, isolierendes Element ist und die Reinigungsplatte (20) aus einem flexiblen Material hergestellt ist.

8. Elektrische Maschine gemäß Anspruch 1, wobei die elektrische Maschine vier Schutzabdeckungen (1) für die elektrische Maschine umfasst, die symmetrisch an einer Außenfläche des Gehäuses der elektrischen Maschine angeordnet sind.

## Revendications

1. Machine électrique, comprenant un boîtier de machine électrique et un couvercle de protection (1) de machine électrique monté de manière amovible sur le boîtier de machine électrique, dans laquelle plusieurs ailettes de refroidissement (2) sont fournies sur le boîtier de machine électrique, le couvercle de protection (1) de machine électrique entoure les ailettes de refroidissement (2), et un canal de guidage de flux est formé entre le couvercle de protection (1) de machine électrique et les ailettes de refroidissement (2),
**caractérisée en ce que** le couvercle de protection (1) de machine électrique comprend :
un corps (10), adapté pour un mouvement dans une direction axiale de la machine électrique ; et
une plaque de nettoyage (20) reliée au corps (10), la plaque de nettoyage (20) étant adaptée pour un mouvement d'avant en arrière dans la direction axiale de la machine électrique sous l'action d'entraînement du corps (10),
dans laquelle un canal de refroidissement est formé entre des ailettes de refroidissement adjacentes parmi les ailettes de refroidissement (2), et la plaque de nettoyage (20) a plusieurs protrusions (22) ; la forme de la protrusion (22) correspond à la forme du canal de refroidissement, afin de permettre l'insertion de la protrusion (22) dans le canal de refroidissement.

2. Machine électrique selon la revendication 1, dans laquelle une surface externe du boîtier de machine électrique est pourvue d'un orifice de montage, un bord au niveau d'un côté du couvercle de protection (1) de machine électrique est monté sur le boîtier de machine électrique, et une rotation du couvercle de protection (1) de machine électrique autour du bord est permise ; un bord au niveau d'un autre côté du couvercle de protection (1) de machine électrique est adapté pour être fixé au boîtier de machine électrique au moyen de l'orifice de montage et d'un élément de raccordement fileté.

3. Machine électrique selon la revendication 1, dans laquelle le corps (10) s'étend dans une direction circonférentielle du boîtier de machine électrique de sorte qu'une section transversale du corps (10) est en forme d'arc.

4. Machine électrique selon la revendication 1, dans laquelle la plaque de nettoyage (20) est fixée à une extrémité du corps (10) .

5. Machine électrique selon la revendication 1, dans laquelle la plaque de nettoyage (20) et le corps (10) sont fixés ensemble au moyen d'une pièce de raccordement (30), la pièce de raccordement (30) permettant à la plaque de nettoyage (20) de se rapprocher ou de s'éloigner du corps (10).

6. Machine électrique selon la revendication 1, dans laquelle la plaque de nettoyage (20) et le corps (10) sont un élément en plastique formé d'un seul tenant.

7. Machine électrique selon la revendication 1, dans laquelle le corps (10) est un élément isolant dur, et la plaque de nettoyage (20) est constituée d'un matériau flexible.

8. Machine électrique selon la revendication 1, dans laquelle la machine électrique comprend quatre dits couvercles de protection (1) de machine électrique disposés de manière symétrique sur une surface externe du boîtier de machine électrique.
